# FASCICULE DE BREVET EUROPEEN

(11) **EP 3 377 795 B1**
(45) Date de publication et mention de la délivrance du brevet: **20.03.2019**
(21) Numéro de dépôt: 16802002.2
(22) Date de dépôt: 17.11.2016
(51) Int. Cl.: F16L 37/086, F16L 37/10, G21C 13/036, G21D 1/00, G01K 7/02, G01K 1/08, G21C 17/112, G21C 19/02

(54) **DISPOSITIF D'ÉTANCHÉITÉ ENTRE UN TUBE ET UNE COLONNE LE TRAVERSANT, SON PROCÉDÉ DE MONTAGE**
ABDICHTUNGSVORRICHTUNG ZWISCHEN EINEM ROHR UND EINER DURCH DIESES ROHR DURCHGEHENDEN SÄULE, VERFAHREN ZUR MONTAGE DAVON
SEALING DEVICE BETWEEN A TUBE AND A COLUMN PASSING THROUGH THE LATTER, METHOD FOR MOUNTING SAME

(30) Priorité: 20.11.2015 FR 1561211
(43) Date de publication de la demande: 26.09.2018
(73) Titulaire: Electricité de France, 75008 Paris (FR)
(72) Inventeur: GAULUPEAU, Frédéric, 01500 Ambutrix (FR)
(74) Mandataire: Regimbeau
(86) Numéro de dépôt international: PCT/EP2016/078070
(87) Numéro de publication internationale: WO 2017/085221

(56) Documents cités:
- BE-A6- 1 008 091
- JP-A- H1 048 383
- JP-A- H1 062 583
- JP-A- H1 062 584
- US-A- 592 899
- US-A- 2 361 827
- US-A- 4 807 262
- US-A- 5 828 711
- US-A1- 2004 150 224

## Description

L'invention concerne un dispositif d'étanchéité destiné à être fixé contre un bord d'extrémité d'un tube et contre une colonne devant traverser le tube, ainsi qu'un procédé pour le montage de ce dispositif.

Un domaine de l'invention concerne notamment les colonnes de thermocouples disposées sur un tube d'un couvercle d'une cuve d'un réacteur à eau sous pression, tel que par exemple un réacteur nucléaire d'une centrale nucléaire de production d'électricité, ces thermocouples devant mesurer par la colonne entrant à l'intérieur de la cuve, la température dans celle-ci.

Le document JP-A-10062583 décrit un dispositif d'étanchéité comportant une embase ayant trois cames devant enserrer une colonne verticale de thermocouples, dont deux cames fixes et une came mobile en faisant tourner un boulon extérieur horizontal vissé dans l'embase. Un inconvénient de ce dispositif connu est qu'il effectue un serrage de la came mobile contre les cames fixes, conduisant à des dissymétries de serrage et donc de force d'application sur les joints d'étanchéité, avec un risque de coincement. Un autre inconvénient de ce dispositif est que l'utilisateur doit s'efforcer d'éviter que les cames se mettent en biais autour de la colonne. Un autre inconvénient de ce dispositif est que l'utilisateur met beaucoup de temps pour serrer le boulon afin d'enserrer la colonne, ce qui est pénalisant dans les milieux à fortes contraintes pour le personnel, tels que par exemple dans une centrale nucléaire de production d'électricité, à l'intérieur de laquelle le personnel peut être soumis à des rayonnements ionisants.

Le document JP-A-10062584 décrit un dispositif d'étanchéité comportant une embase ayant trois cames devant enserrer une colonne verticale de thermocouples, dont une came fixe et deux cames mobiles par rotation de deux poignées fixées à celles-ci autour de deux axes verticaux fixés à l'embase. Un inconvénient de ce dispositif connu est qu'il effectue un serrage des cames mobiles contre une came fixe, conduisant à des dissymétries de serrage et donc de force d'application sur les joints d'étanchéité, avec un risque de coincement. Un autre inconvénient de ce dispositif est que l'utilisateur doit s'efforcer d'éviter que les cames se mettent en biais autour de la colonne. Un autre inconvénient de ce dispositif est que l'utilisateur doit exercer plusieurs fois une force importante pour faire tourner chacune des poignées, ce qui est pénalisant dans les milieux à fortes contraintes pour le personnel, tels que par exemple dans une centrale nucléaire de production d'électricité, à l'intérieur de laquelle le personnel peut être soumis à des rayonnements ionisants.

Le document JP-A-10048383 décrit un dispositif d'étanchéité comportant une embase ayant des cames devant enserrer une colonne verticale de thermocouples, ces cames étant mobiles par rotation de deux poignées fixées à celles-ci autour de deux axes horizontaux fixés à l'embase. Ce dispositif a des inconvénients analogues à ceux indiqués ci-dessus pour le dispositif connu par le document JP-A-10062584.

L'invention vise à obtenir un dispositif d'étanchéité et un procédé pour son montage, qui pallient les inconvénients de l'état de la technique.

A cet effet, un premier objet de l'invention est un dispositif d'étanchéité destiné à être fixé contre un bord d'extrémité d'un tube et contre une colonne devant traverser selon un axe de la colonne une ouverture du tube, délimitée par ce bord, le dispositif comportant une embase ayant une traversée pour le passage axial de la colonne, un premier organe d'étanchéité apte à être activé pour être pressé contre la colonne dans la traversée, un corps entourant autour de l'axe une cavité pour recevoir le bord du tube et un deuxième organe d'étanchéité destiné à être pressé contre le bord du tube dans la cavité, la traversée communiquant axialement avec la cavité,
caractérisé en ce que le dispositif comporte également une bague de serrage et en ce que le corps comporte une pluralité de guides, qui sont répartis autour de la cavité et qui s'étendent entre un côté intérieur débouchant dans la cavité et un côté extérieur débouchant contre la bague de serrage concentrique, montée rotative autour de l'axe par rapport à l'embase,
une pluralité de doigts intérieurs solidaires d'une pluralité d'organes extérieurs d'actionnement étant guidés respectivement dans la pluralité de guides autour de la cavité, la bague comportant une pluralité de zones d'actionnement distantes entre elles et aptes à être positionnées contre respectivement la pluralité d'organes extérieurs d'actionnement pour faire coulisser les doigts en saillie dans la cavité pour le serrage des doigts contre le bord du tube lorsque la bague et l'embase sont l'une par rapport à l'autre dans une première position de rotation relative, dite première position de serrage du bord du tube,
la bague et l'embase étant aptes à passer, par rotation l'une par rapport à l'autre autour de l'axe, entre l'une et l'autre de la première position de rotation relative et d'une deuxième position de rotation relative, dite de desserrage du bord du tube, dans laquelle la pluralité de zones d'actionnement est écartée de la pluralité d'organes extérieurs d'actionnement pour permettre aux doigts d'être rentrés dans le corps.

Grâce à l'invention, on gagne en fiabilité de serrage et en temps d'intervention du personnel pour mettre en oeuvre la fixation du dispositif, ce qui est particulièrement avantageux dans les milieux à fortes contraintes pour le personnel, tels que par exemple dans une centrale nucléaire de production d'électricité, à l'intérieur de laquelle le personnel peut être soumis à des rayonnements ionisants. L'invention permet ainsi par une seule manipulation de rotation de la deuxième à la première position de serrer d'une manière uniforme et quasi simultanée l'ensemble des doigts contre le tube, évitant tout coincement ou mauvais positionnement.

Suivant un mode de réalisation de l'invention, la pluralité de guides s'étend radialement par rapport à l'axe pour le guidage radial des doigts par rapport à l'axe.

Suivant un mode de réalisation de l'invention, l'embase et/ou le corps est solidaire d'au moins une première poignée, tandis que la bague est solidaire d'au moins une deuxième poignée.

Suivant un mode de réalisation de l'invention, l'embase comporte un verrou de blocage de la bague et du corps dans leur première position de rotation relative, le verrou étant relié à un moyen d'actionnement manuel permettant de déverrouiller le verrou pour permettre le passage de la première position de rotation relative à la deuxième position de rotation relative.

Suivant un mode de réalisation de l'invention, la pluralité de zones d'actionnement comprend respectivement une pluralité de parties de la surface intérieure de la bague, séparées entre elles autour de l'axe par une pluralité d'évidements de cette surface intérieure, qui sont plus éloignés de l'axe que ses parties et qui servent à la réception respectivement de la pluralité d'organes extérieurs d'actionnement dans la deuxième position de rotation relative.

Suivant un mode de réalisation de l'invention, chaque évidement a une première pente, partant de la partie de la surface intérieure de la bague et s'éloignant de l'axe jusqu'à un fond de l'évidement, pour le guidage de l'organe extérieur d'actionnement entre l'une et l'autre d'une première position rentrée dans le guide dans la première position de rotation relative et d'une deuxième position saillante dans le fond dans la deuxième position de rotation relative.

Suivant un mode de réalisation de l'invention, chaque organe extérieur d'actionnement comprend une came ayant une deuxième pente tournée vers la bague et montant dans le même sens que la première pente.

Suivant un mode de réalisation de l'invention, chaque guide comporte un élément de contrainte pour contraindre l'organe extérieur d'actionnement à se déplacer vers la bague.

Suivant un mode de réalisation de l'invention, le premier organe d'étanchéité comporte un premier joint dynamique, jouxtant la traversée et apte à être activé par gonflage par l'injection d'un fluide via un about de l'embase pour presser une partie du premier joint contre la colonne dans la traversée.

Suivant un mode de réalisation de l'invention, le dispositif d'étanchéité comporte des moyens de transmission de mouvement pour presser le deuxième organe d'étanchéité contre le bord du tube, lorsque la bague et l'embase passent de la deuxième position de rotation relative et à la première position de rotation relative.

Suivant un mode de réalisation de l'invention, le deuxième organe d'étanchéité comporte un deuxième joint d'étanchéité tourné dans un premier sens de l'axe vers une première surface du bord du tube, les moyens de transmission de mouvement comportent sur chaque doigt une deuxième surface d'appui contre une deuxième surface du bord, laquelle est éloignée axialement de la première surface, cette deuxième surface d'appui montant dans un deuxième sens inverse du premier sens en allant de l'intérieur vers l'extérieur, pour presser le deuxième joint vers la première surface, lorsque le doigt coulisse dans la cavité de l'extérieur vers l'intérieur jusqu'à la première position de serrage du bord.

Suivant un mode de réalisation de l'invention, au moins trois doigts, dont au moins deux sont positionnés dans un premier secteur angulaire de 180° autour de l'axe et dont au moins un autre est positionné dans un deuxième secteur angulaire de 180° complémentaire du premier secteur dans la première position de serrage du bord du tube, sont prévus.

Suivant un mode de réalisation de l'invention, le dispositif d'étanchéité comporte des moyens de fixation amovible d'au moins un bouchon pour boucher la traversée en l'absence de colonne dans cette dernière.

Un deuxième objet de l'invention est un procédé de montage du dispositif d'étanchéité tel que décrit ci-dessus contre un bord d'extrémité d'un tube et contre une colonne devant traverser selon un axe de la colonne une ouverture du tube, délimitée par ce bord, le dispositif d'étanchéité comportant des moyens de transmission de mouvement pour presser le deuxième organe d'étanchéité contre le bord du tube, lorsque la bague et l'embase passent de la deuxième position de rotation relative et à la première position de rotation relative de serrage contre le bord du tube, procédé dans lequel on fait tourner la bague et l'embase l'une par rapport à l'autre autour de l'axe de la deuxième position de rotation relative et à la première position de rotation relative, pour serrer l'embase contre le bord (281) du tube et pour presser le deuxième organe d'étanchéité contre le bord du tube, puis on active le premier organe d'étanchéité pour le presser contre la colonne dans la traversée.

L'invention sera mieux comprise à la lecture de la description qui va suivre, donnée uniquement à titre d'exemple non limitatif en référence aux dessins annexés, sur lesquels :
- la figure 1 représente schématiquement une centrale nucléaire, dans laquelle peut être mis en oeuvre le dispositif d'étanchéité et son procédé de montage suivant l'invention,
- la figure 2 est une vue schématique en coupe transversale d'une cuve d'un réacteur de centrale nucléaire suivant la figure 1, sur laquelle peut être mis en oeuvre le dispositif d'étanchéité suivant l'invention,
- la figure 3 est une vue schématique en perspective de dessus du dispositif d'étanchéité suivant un mode de réalisation de l'invention,
- la figure 4 est une vue schématique en perspective de dessous du dispositif d'étanchéité suivant un mode de réalisation de l'invention,
- la figure 5 est une vue schématique en coupe axiale du dispositif d'étanchéité suivant un mode de réalisation de l'invention,
- la figure 6 est une vue schématique de dessous du dispositif d'étanchéité suivant l'invention dans une première position de serrage du tube,
- la figure 7 est une vue schématique de dessous du dispositif d'étanchéité suivant un mode de réalisation de l'invention dans une deuxième position de desserrage du tube,
- la figure 8 est une vue schématique en perspective de dessus du dispositif d'étanchéité suivant un mode de réalisation de l'invention, dans lequel son ouverture est bouchée par une plaque.
- la figure 9 représente schématiquement en coupe verticale un exemple de bride sur laquelle peut être fixé le dispositif d'étanchéité suivant l'invention.

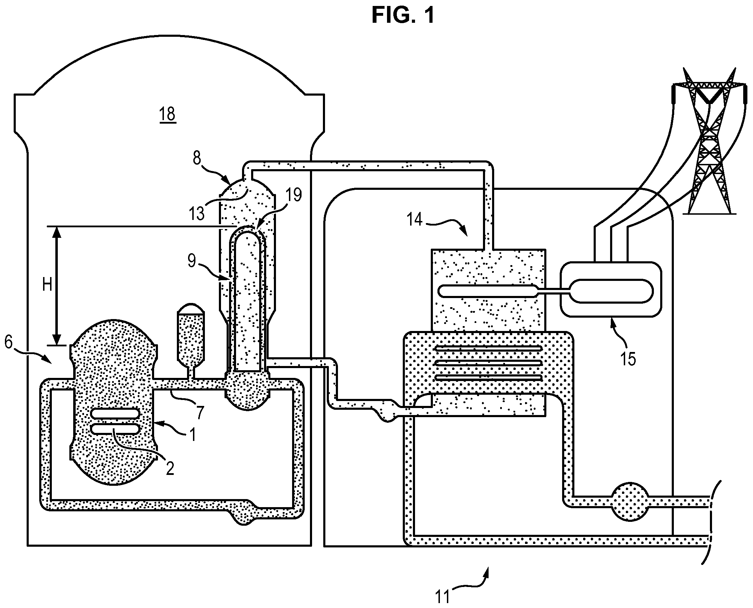

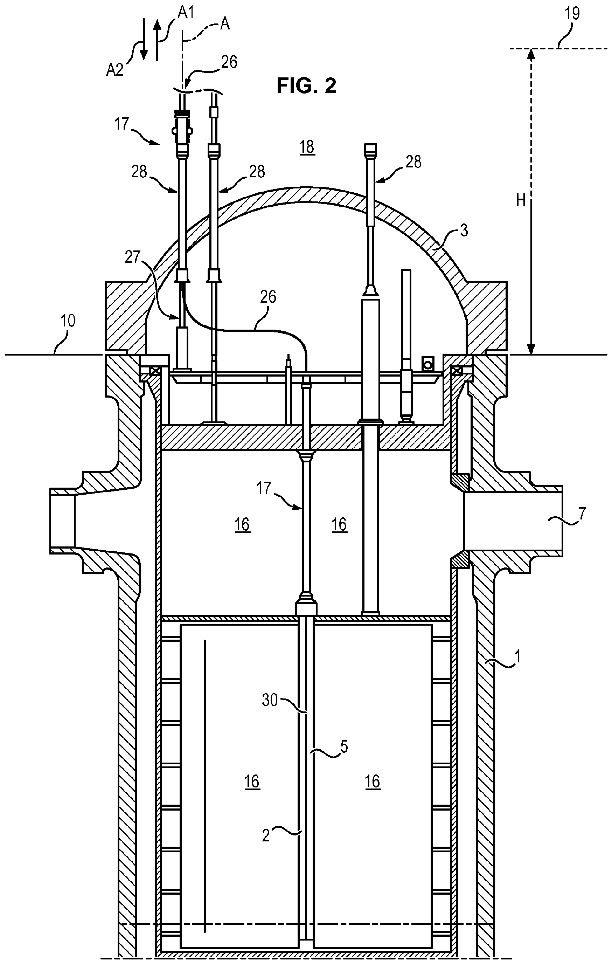

On décrit d'abord ci-dessous, en référence aux figures 1 et 2 un contexte auquel peuvent être appliqués le dispositif d'étanchéité suivant l'invention et le procédé pour son montage suivant l'invention. Bien entendu, l'invention peut être appliquée à des contextes différents.

La figure 1 représente une centrale nucléaire. L'énergie thermique est produite par son réacteur nucléaire (6) formé de combustible fissile (2) refroidi par de l'eau (16), le tout placé dans la cuve (1). La figure 2 montre un élément (5) de combustible fissile. L'eau chaude (7) produite parcourt un générateur de vapeur (8) par des centaines d'épingles (9) en U inversés de très grande hauteur (H) par rapport au réacteur, en particulier par rapport au plan de joint (10) de la cuve (1) sur laquelle repose le couvercle (3). La chaleur des épingles va porter l'eau d'un circuit secondaire (11) à l'état de vapeur (13) qui va actionner des turbines (14) elles-mêmes entrainant des génératrices (15) produisant de l'électricité.

Le tube (28) est soudé au couvercle (3). A l'intérieur du tube (28) passe une colonne (27) de thermocouple traversant le couvercle (3) à l'intérieur du tube (28).

En exploitation, il est important de contrôler la puissance du réacteur (6) en surveillant notamment la température des assemblages combustibles (5) du coeur (2) et plus précisément la température de l'eau (16) qui le refroidit. A cet effet, une instrumentation interne (17), dite supérieure, au-dessus du coeur comme le montre la figure 2, permet le contrôle de la puissance et la mesure de la température par des thermocouples (26) mobiles dans le haut du coeur. Ces thermocouples (26) sont guidés dans des colonnes (27), qui traversant le couvercle (3) et qui sont maintenues par des tubes (28), qui traversent le couvercle (3), qui sont soudés à ce dernier en émergeant en partie extérieure de ce dernier, c'est-à-dire dans l'enceinte (18) du bâtiment réacteur.

L'eau du réacteur étant sous pression à 155 bars, il est indispensable qu'en fonctionnement l'étanchéité entre les colonnes (27) et les tubes (28) soit assurée, certains systèmes d'étanchéité, appelés ci-après systèmes dédiés d'étanchéité, et non représentés étant montés au préalable à cet effet sur les colonnes (27) et les tubes (28) pour assurer l'étanchéité entre ceux-ci lors du fonctionnement du réacteur. A l'arrêt du réacteur, on enlève le couvercle (3), ce qui impose mécaniquement le retrait de ces systèmes dédiés d'étanchéité entre les colonnes (27) et tubes (28).

Or, une opération de maintenance particulière appelée Mise Sous Vide du circuit primaire pour son remplissage en eau, nécessite de remettre temporairement le couvercle (3) sur la cuve (1). Comme dans ce cas la colonne (27) des thermocouples a été dégarnie de ses systèmes dédiés d'étanchéité, la fonction d'étanchéité doit à nouveau être assurée. L'étanchéité doit de nouveau être assurée entre la colonne (27) et le tube (28) ou la bride (40). A l'arrêt du réacteur, pour la Mise sous Vide, la pression du coeur est à pression atmosphérique comparativement aux 155 bars en fonctionnement et la fonction d'étanchéité est généralement assurée par un autre dispositif d'étanchéité, et non par les systèmes dédiés d'étanchéité. En effet les pièces des systèmes dédiés d'étanchéité sont sensibles à la manipulation et imposent une dosimétrie supplémentaire. Mais cette solution temporaire n'est pas satisfaisante. Elle conduit à des opérations globalement pénalisantes; tout d'abord en matière de durée donc de coût et conséquemment accroît inutilement la dosimétrie individuelle et collective des personnels, tout en restant dans les limites autorisées pour les travaux exposés au rayonnement.

Un des problèmes résolus par la présente invention est d'améliorer cette situation lors de l'essai de Mise Sous Vide du circuit primaire d'une centrale nucléaire, mettant en oeuvre le couvercle (3) de la cuve. Le dispositif d'étanchéité suivant l'invention permet d'assurer la fonction d'étanchéité des colonnes de thermocouples lors de la réalisation des essais de Mise Sous Vide (MSV) du circuit primaire, coeur déchargé, d'une centrale nucléaire. La solution est applicable quand l'utilisation du vrai couvercle (c'est-à-dire du couvercle (3) utilisé lors du fonctionnement du réacteur) pour la mise sous vide est incontournable pour différentes raisons, par exemple non disponibilité d'un faux-couvercle dans un autre mode de réalisation de la mise sous vide. L'invention améliore et fiabilise l'étanchéité réalisée autour des colonnes (27) de thermocouples et simplifie le mode de pose en supprimant des interventions humaines en fond de piscine, proche du couvercle de cuve, et coûteux en dosimétrie collective intégrée.

Ci-dessous sont rappelés les principes de la procédure de la mise sous vide (appelée ci-dessous MSV) et la fonction étanchéité des colonnes (27) de thermocouples, en exploitation et en situation de l'essai de remplissage du circuit primaire lors de la Mise Sous Vide selon l'art antérieur.

Une fois le réacteur mis à l'arrêt, le couvercle (3) est enlevé de la cuve (1) et est déposé. Le combustible (5) est déchargé.

Avant de recharger le nouveau coeur, il est nécessaire de remplir le circuit primaire et de n'y laisser aucun volume d'air. Lors du remplissage d'une boucle de réacteur, à pression Atmosphérique, l'équilibre hydrostatique des niveaux d'eau ne permet pas de dépasser la hauteur du plan de joint de cuve (10), en raison de la hauteur (H) qui sépare le plan de joint de cuve (10) et le haut (19) des épingles (9).

Pour compléter le remplissage et combler en eau la partie supérieure des épingles, donc en chassant l'air qui s'y trouve piégé, une opération de Mise Sous Vide (MSV) est réalisée.

Le document FR-A-2 921 510 décrit dans le détail ce procédé mis en oeuvre sur un faux couvercle. Ce procédé est applicable au 'vrai couvercle' (3).

Le procédé de Mise Sous Vide (MSV) comporte les étapes suivantes.

Après arrêt du réacteur et remise à la pression à Pression Atmosphérique du circuit primaire,
- Le couvercle (3) est retiré, le système dédié d'étanchéité des dispositifs (27, 28) est remplacé selon la pratique d'art antérieur par des capuchons de protection des brides femelles (40).
- Le coeur est déchargé, le circuit primaire est vidangé pour les maintenances d'arrêt de tranche.
- Fin des maintenances, le circuit primaire doit être rempli.
- On place le couvercle (3), en le posant sur un joint en silicone sur le plan de joint de cuve (10) qui étanche le circuit primaire à pression atmosphérique, on pose un système d'étanchéité provisoire autour des colonnes (27) de thermocouples et on fait le vide dans le circuit primaire, à 300 mb environ; cette dépressurisation accroît l'étanchéité au niveau du joint silicone.
- Le circuit primaire est rempli au plus haut des épingles, laissant cependant des poches d'air présentes (étape de remplissage).
- Des évents sont ensuite ouverts pour casser le vide ce qui fait circuler l'eau vers le haut des épingles, le niveau d'eau dans la cuve baisse. La pression repasse à pression Atmosphérique.
- On vidange partiellement l'eau jusqu'au plan de joint de cuve (10), on retire le système d'étanchéité provisoire, puis l'on replace les capuchons de protection. Le plan de joint de cuve est au voisinage du niveau du fond de la piscine.
- Le couvercle (3) est retiré; le remplissage de la cuve se poursuit.
- Le coeur est chargé.
- Le couvercle (3) est replacé et boulonné sur la cuve.
- On retire le les capuchons de protection puis l'on replace les étanchéités normales servant au fonctionnement.

Ces étapes de la MSV imposent d'étancher les colonnes des thermocouples. Comme le montre la figure 2, l'étape de remplissage en eau conduit à combler la totalité de la cuve (1) et son couvercle (3) d'eau ; ladite eau pouvant s'infiltrer dans les traversées du couvercle desquelles émergent les tubes (28) soudés au couvercle (3). Lors de la pose ou dépose du couvercle (3), la colonne (27) coulisse en quelque sorte à l'intérieur du tube (28), et cela après avoir retiré tous les autres dispositifs assurant l'étanchéité, disposés en partie supérieure.

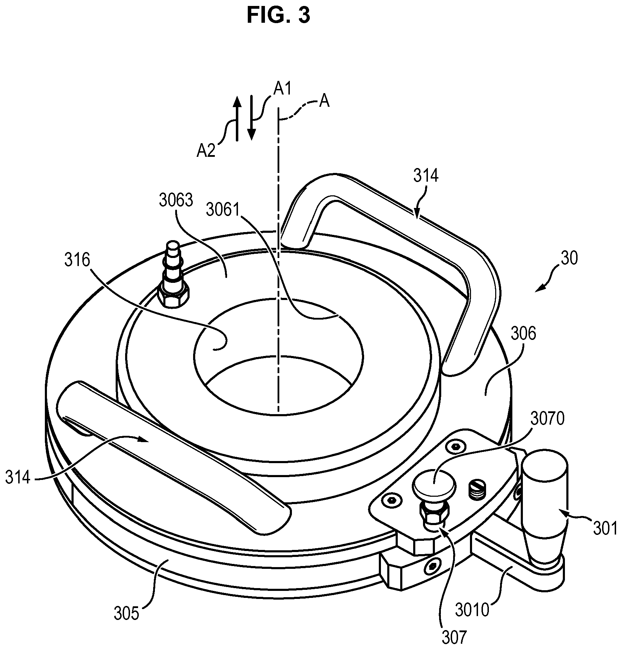

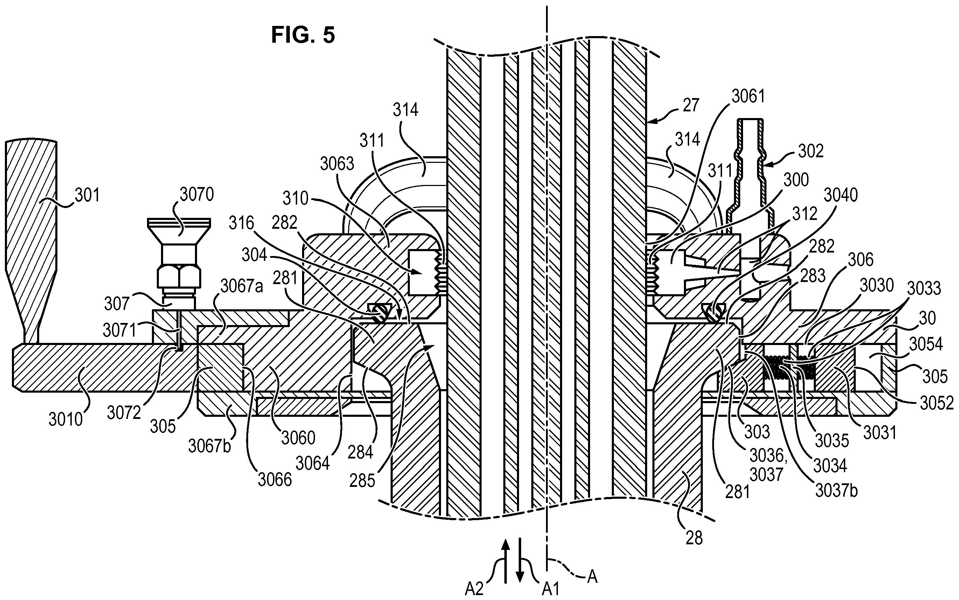

On décrit ci-dessous en référence aux figures 3 à 8 le dispositif d'étanchéité suivant l'invention.

Le dispositif 30 d'étanchéité suivant l'invention est destiné à être fixé contre un bord 281 d'extrémité d'un tube 28 et contre une colonne 27. La colonne 27 doit traverser selon un axe A de la colonne 27 une ouverture 285 du tube 28, cette ouverture 285 étant délimitée par ce bord 281. La colonne 27 a par exemple une surface extérieure cylindrique, notamment cylindrique circulaire autour de l'axe A. La colonne 27 peut être toute colonne servant à faire passer, depuis le bord 281 d'extrémité du tube 28, une instrumentation de mesure d'un ou plusieurs paramètres dans l'espace situé à l'autre extrémité du tube 28 (intérieur de la cuve 1 dans l'exemple d'application mentionné ci-dessus), comme par exemple une ou plusieurs températures, par exemple par un ou plusieurs thermocouples, ou d'autres paramètres.

Le dispositif 30 d'étanchéité comporte une embase 306 ayant une traversée 3061 pour le passage de la colonne 27 selon l'axe A. Le dispositif 30 d'étanchéité comporte en outre un premier organe 310 d'étanchéité pour réaliser l'étanchéité contre la colonne 27 dans la traversée 3061. Suivant un mode de réalisation, le premier organe 310 d'étanchéité est apte à être activé pour être pressé contre la colonne 27 dans la traversée 3061. Lorsque le premier organe 310 d'étanchéité n'est pas activé, la colonne 27 peut coulisser le long de l'axe A dans la traversée 3061.

Le dispositif 30 d'étanchéité comporte en outre un corps 3060, qui entoure autour de l'axe A une cavité 316 servant à recevoir le bord 281 du tube 28. Le dispositif 30 d'étanchéité comporte en outre un deuxième organe 304 d'étanchéité destiné à être pressé contre le bord 281 du tube 28 dans la cavité 316. La traversée 3061 communique, dans une direction allant parallèlement à l'axe A, avec la cavité 316. La traversée 3061 a une dimension transversale (par exemple diamètre transversal), qui est inférieure à la dimension transversale (par exemple diamètre transversal) de la cavité 316, la direction transversale étant prise par rapport à l'axe A traversant cette direction transversale, laquelle est par exemple perpendiculaire à l'axe A.

Suivant l'invention, le corps 3060 comporte une bague 305 montée rotative autour du corps 3060, cette bague 305 servant à serrer d'une manière concentrique une pluralité de doigts 303 guidés dans des guides 3030 contre le bord 281 du tube 28. Le corps 3060 comporte une pluralité de guides 3030, qui sont répartis autour de la cavité 316 et qui s'étendent entre un côté intérieur 3064 du corps 3060, débouchant dans la cavité 316 et un côté extérieur 3062 débouchant contre la bague 305. La bague 305 est montée rotative autour de l'axe A par rapport à l'embase 306. La bague 305 entoure le corps 3060 et est donc située à l'extérieur de ce corps 3060. La bague 305 est par exemple de forme annulaire. La bague 305 est par exemple montée rotative dans une gorge périphérique 3066 du corps 3060, délimitée par une paroi supérieure 3067a et une paroi inférieure 3067b, écartées l'une de l'autre suivant l'axe A. La bague 305 peut par exemple être réalisée sous la forme de deux demi-bagues autour de l'axe A.

Dans ce qui suit, le sens allant de l'extérieur vers l'intérieur est un sens se rapprochant de l'axe A ou de la colonne 27 ou de la cavité 316.

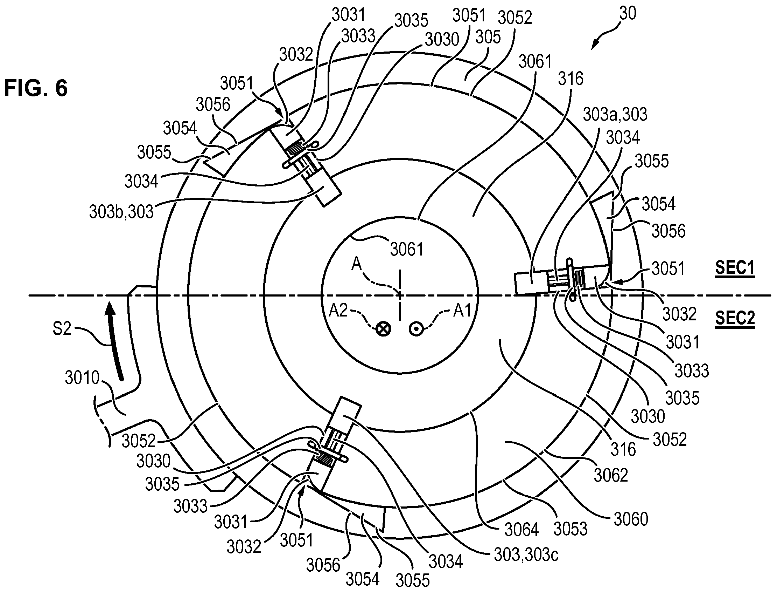

Il est prévu une pluralité de doigts 303 intérieurs, qui sont solidaires respectivement d'une pluralité d'organes extérieurs 3031 d'actionnement. La pluralité d'organes extérieurs 3031 d'actionnement sont guidés respectivement dans la pluralité de guides 3030 autour de la cavité 316. La bague 305 comporte une pluralité de zones 3051 d'actionnement distantes entre elles et aptes à être positionnées contre, respectivement, la pluralité d'organes extérieurs 3031 d'actionnement pour faire coulisser les doigts 303 en saillie dans la cavité 316 pour le serrage des doigts 303 contre le bord 281 du tube 28, lorsque la bague 305 et l'embase 306 sont l'une par rapport à l'autre dans une première position de rotation relative, dite première position de serrage du bord 281 du tube 28, représentée à la figure 6.

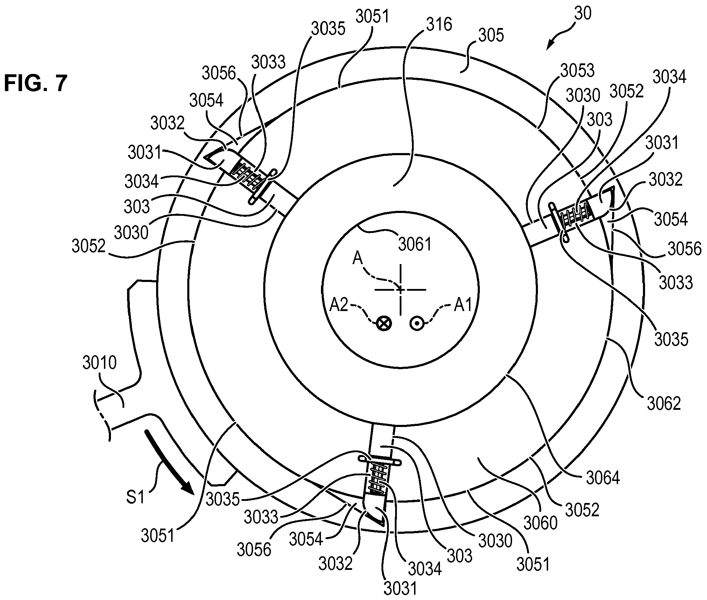

La bague 305 et l'embase 306 sont aptes à passer, par rotation l'une par rapport à l'autre autour de l'axe A, entre l'une et l'autre de la première position de rotation relative et d'une deuxième position de rotation relative, dite de desserrage du bord 281 du tube 28. Dans cette deuxième position de rotation relative, représentée à la figure 7, la pluralité de zones 3051 d'actionnement est écartée de la pluralité d'organes 3031 extérieurs d'actionnement pour permettre aux doigts 303 d'être rentrés dans le corps 3060. C'est dans cette deuxième position de desserrage que le dispositif 30 d'étanchéité peut être enfilé autour de la colonne 27 et du bord 281 ou en être enlevé.

Ainsi, la bague 305 est une bague 305 de serrage concentrique des doigts contre le bord 281 du tube 28. La bague 305 permet ainsi d'assurer une répartition uniforme de la force de serrage autour du tube 28, en effectuant une seule action de rotation autour de la colonne 27. L'invention permet ainsi de gagner en temps de manipulation et en temps d'installation du dispositif 30 d'étanchéité, ainsi qu'en fiabilité du serrage et en fiabilité de l'étanchéité.

Le corps 3060 peut être par exemple de forme générale annulaire autour de l'axe A et de la cavité 316. L'embase 306 comporte par exemple une partie supérieure 3063 délimitant la traversée 3061 et raccordée ou fixée ou d'une seule pièce avec le corps 3060. La partie supérieure 3063 peut être par exemple de forme annulaire autour de l'axe A et autour de la traversée 3061. La partie supérieure 3063 peut être formée par exemple par une première plaque surmontant et fixée à une deuxième plaque formant le corps 3060, ces plaques s'étendant transversalement et par exemple perpendiculairement à l'axe A.

Dans le mode de réalisation représenté aux figures, le côté intérieur 3064 du corps 3060 est cylindrique autour de l'axe A, par exemple cylindrique circulaire autour de l'axe A. Le côté extérieur 3062 du corps 3060 est par exemple cylindrique autour de l'axe A, par exemple cylindrique circulaire autour de l'axe A. La bague 305 est par exemple cylindrique autour de l'axe A, par exemple cylindrique circulaire autour de l'axe A.

Les guides 3030 sont agencés pour assurer un guidage de leur doigt respectif 303 de l'extérieur vers l'intérieur par rapport à l'axe A, c'est-à-dire pour faire se rapprocher les doigts 303 par exemple à cet axe A, et dans le sens inverse. Dans le mode de réalisation représenté aux figures 6 et 7, les guides 303 sont rectilignes. Bien entendu, dans d'autres modes de réalisation non représentés, les guides 303 pourraient être courbes. Suivant le mode de réalisation représenté aux figures 6 et 7, la pluralité de guides 3030 s'étend radialement par rapport à l'axe A pour le guidage radial des doigts 303 par rapport à l'axe A. Bien entendu, les guides 3030 peuvent ne pas s'étendre radialement par rapport à l'axe A et peuvent s'étendre en oblique.

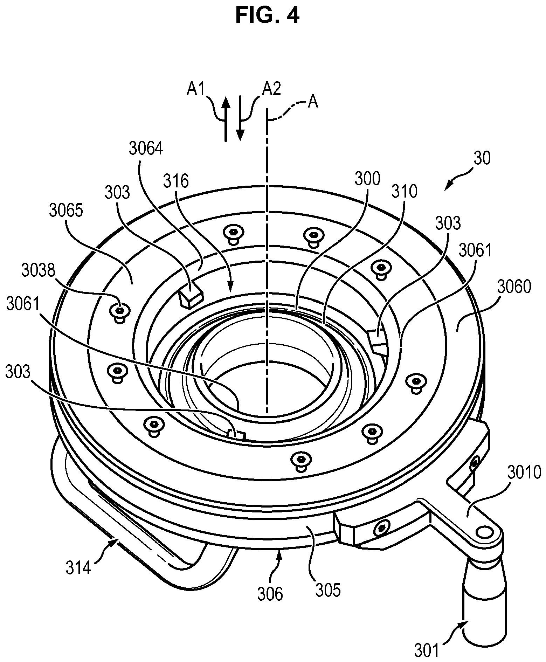

Suivant le mode de réalisation de la figure 4, il peut être prévu sous la partie inférieure du corps 3060, c'est-à-dire sous sa partie éloignée des organes 310, 304 d'étanchéité selon l'axe A, un anneau 3065 délimitant les guides 3030 et permettant, lorsque l'anneau 3037 est démonté, d'insérer dans les guides 3030 les doigts 303, les organes 3031 d'actionnement et les pièces qui y sont fixées. L'anneau 3065 peut être fixé au corps 3030 par des moyens de fixation amovibles, par exemple par des boulons 3038 ou par des moyens de fixation non amovibles, par exemple par des rivets 3038. Les figures 6 et 7 sont représentées sans montrer la paroi inférieure 3067b et la partie 3065, afin de montrer les éléments présents dans les guides 3030.

Suivant un mode de réalisation, l'embase 306 et/ou le corps 3060 est solidaire d'au moins une première poignée 314, tandis que la bague 305 est solidaire d'au moins une deuxième poignée 301. Ainsi, les poignées 301 et 314 permettent à l'utilisateur de faire tourner la bague 305 et l'embase 306 l'une par rapport à l'autre autour de l'axe A pour faire passer les doigts 303 entre l'une et l'autre de la première position de serrage à la deuxième position de desserrage. Par exemple, la poignée 301 est fixée à la bague 305 par l'intermédiaire d'un bras 3010 extérieur.

Suivant un mode de réalisation, l'embase 306 comporte un verrou 307 de blocage de la bague 305 et du corps 3060 dans leur première position de rotation relative. Le verrou 307 est relié à un moyen 3070 d'actionnement manuel, par exemple en forme de bouton cylindrique surmontant le verrou 307, ce moyen 3070 permettant de déverrouiller le verrou 307 pour permettre le passage de la première position de rotation relative à la deuxième position de rotation relative. Ainsi, le verrou 307 permet de bloquer les doigts 303 dans la première position de serrage du bord 281 du tube 28. Le verrou 307 comporte par exemple une première partie 3071 de verrou apte à rentrer dans un creux 3072 de la bague 305 ou d'un bras extérieur 3010 fixé à celle-ci, pour bloquer cette bague 305 dans la première position de serrage. Le moyen 3070 d'actionnement manuel est prévu pour soulever la première partie 3071 du verrou et l'enlever du creux 3072 afin de déverrouiller le verrou 307. Un moyen de précontrainte peut être prévu sur la première partie 3071 du verrou pour la contraindre vers la bague 305 ou vers le bras 3010, afin que cette partie 3071 soit engagée automatiquement dans le creux 3072 dans la première position de serrage.

Suivant un mode de réalisation, la pluralité de zones 3051 d'actionnement comprend respectivement une pluralité de premières parties 3052 de la surface intérieure 3053 de la bague 305. Ces parties 3052 de la surface intérieure 3053 de la bague 305 sont séparées entre elles par une pluralité d'évidements 3054 de cette surface intérieure 3053. Ces évidements 3054 sont plus éloignés de l'axe A que les premières parties 3052 de la surface intérieure 3053 de la bague 305 et servent à la réception respectivement de la pluralité d'organes extérieurs 3031 d'actionnement dans la deuxième position de rotation relative, c'est-à-dire dans la position de desserrage.

Suivant un mode de réalisation, chaque évidement 3054 a une première pente, qui part de la première partie 3052 adjacente et qui s'éloigne de l'axe A jusqu'à un fond 3055, pour guider l'organe extérieur 3031 d'actionnement entre l'une et l'autre d'une première position rentrée dans le guide 3030 dans la première position de rotation relative, c'est-à-dire de serrage, et d'une deuxième position saillante dans le fond 3055 de l'évidement 3054 dans la deuxième position de rotation relative, c'est-à-dire dans la deuxième position de desserrage. Ainsi, lorsque l'on fait tourner la bague 305 dans un premier sens SI de rotation de serrage autour de l'axe A par rapport au corps 3060 ou à l'embase 306, c'est-à-dire de la deuxième position à la première position, chaque organe 3031 d'actionnement glisse contre la deuxième partie 3056 de la surface intérieure 3053 délimitant l'évidement 3054, depuis le fond 3055 jusqu'à la première partie 3052, ce qui contraint l'organe d'actionnement 3031, et donc le doigt 303 fixé à celui-ci, à coulisser dans le guide 3030 de l'extérieur vers l'intérieur pour se rapprocher de l'axe A et ainsi faire dépasser le doigt 303 du côté intérieur 3064 dans la cavité 316. Lorsque l'on fait tourner la bague 305 par rapport au corps 3060 ou à l'embase 306 dans un sens S2 de rotation de desserrage, inverse du premier sens SI autour de l'axe A, chaque organe 3031 d'actionnement est rendu libre de coulisser vers l'extérieur dans le guide 3030 contre la deuxième partie 3056 de la surface 3053 délimitant l'évidement 3054, pour passer de la première partie 3052 au fond 3055 et faire coulisser le doigt 303 de l'intérieur vers l'extérieur jusqu'à ce que ce doigt 303 ne dépasse plus du côté intérieur 3064 et ne fasse plus saillie dans la cavité 316 dans la deuxième position de desserrage.

Suivant un mode de réalisation, chaque organe extérieur 3031 d'actionnement comprend une came 3032 ayant une deuxième pente tournée vers la bague 305 et montant dans le même sens que la première pente. Ainsi, la came 3032 peut glisser le long de la première pente de la deuxième partie 3056 délimitant l'évidement 3054. Bien entendu, la première pente peut ne pas être identique à la deuxième pente, ainsi que cela est représenté aux figures 6 et 7.

Suivant un mode de réalisation, chaque guide 3030 comporte un élément 3033 de contrainte pour contraindre l'organe extérieur 3031 d'actionnement à se déplacer vers la bague 305, c'est-à-dire de l'intérieur vers l'extérieur. Cet élément 3033 de contrainte est donc prévu pour contraindre le doigt 303 à se déplacer de la cavité 316 vers l'extérieur, c'est-à-dire pour rentrer le doigt 303 dans le corps 3030. Cet élément 3033 de contrainte peut être formé par un ou plusieurs ressort(s). Par exemple, l'organe extérieur 3031 d'actionnement est fixé à son doigt respectif 303 par l'intermédiaire d'une tige 3034. L'élément 3033 de contrainte peut être prévu entre une pièce 3035 de butée fixée au corps 3060 dans le guide 3030 et l'organe 3031 extérieur d'actionnement, par exemple en comportant un ressort de compression entre la pièce 3035 de butée et l'organe 3031. En variante, l'élément 3033 de contrainte peut être prévu entre une pièce 3035 de butée fixée au corps 3060 dans le guide 3030 et le doigt 303, par exemple en comportant un ressort de traction entre la pièce 3035 de butée et le doigt 303. Ainsi, l'organe 3031 d'actionnement est plaqué par l'élément 3033 de contrainte contre la surface intérieure 3053 de la bague 305, à savoir contre sa première partie 3052 plus proche de l'axe A dans la première position de serrage, contre la deuxième partie 3056 lors du passage de la première position de serrage à la deuxième position de desserrage et contre le fond 3055 de l'évidement 3054 dans la deuxième position de desserrage.

Suivant un mode de réalisation, le premier organe 310 d'étanchéité comporte un premier joint dynamique 300, qui jouxte la traversée 3061 et qui est apte à être activé par gonflage par l'injection d'un fluide via un about 302 de l'embase 306 pour presser une partie 311 du premier joint 300 contre la colonne 27 dans la traversée 3061. Ce joint dynamique 300 est par exemple annulaire dans la traversée pour entourer la colonne 27 autour de l'axe A. L'about 302 communique par l'intermédiaire d'évidements intérieurs 312 avec le premier joint 300, pour permettre d'envoyer du fluide dans ce joint 300 depuis l'about 302. L'about 302 est apte à être relié à une conduite extérieure d'envoi de fluide. L'injection du fluide par l'about 302 depuis la conduite extérieure remplit le joint dynamique 300 et le déforme pour provoquer un déplacement de sa partie 311 dans le sens centripète, c'est-à-dire vers la colonne 27, pour que la partie 311 du joint 300 prenne appui contre la colonne 27 afin d'assurer autour de celle-ci une barrière d'étanchéité.

Suivant un mode de réalisation, le dispositif 30 d'étanchéité comporte des moyens de transmission de mouvement 3036 pour presser le deuxième organe 304 d'étanchéité contre le bord 281 du tube 28, lorsque la bague 305 et l'embase 306 passent de la deuxième position de rotation relative à la première position de rotation relative, c'est-à-dire pour serrer le bord 281 du tube 28.

Suivant un mode de réalisation, le deuxième organe 304 d'étanchéité comporte un deuxième joint 3040 d'étanchéité, qui est tourné dans un premier sens A1 de l'axe A vers une première surface 282 du bord 281 du tube 28, cette surface 282 étant transversale à l'axe A et notamment perpendiculaire à l'axe A. Les moyens 3036 de transmission de mouvement comportent une deuxième surface 3037 d'appui, située sur chaque doigt 303. La deuxième surface 3037 d'appui de chaque doigt 303 sert à appuyer contre une deuxième surface 284 du bord 281, la surface 284 étant par exemple parallèle à la surface 3037. Cette deuxième surface 284 est éloignée de la première surface 282 selon l'axe A. Cette deuxième surface 3037 d'appui monte en se rapprochant de la première surface 282 en s'éloignant de l'axe A. Cette deuxième surface 3037 d'appui monte dans un deuxième sens A2 de l'axe A (inverse du premier sens A1) en allant de l'intérieur vers l'extérieur, pour presser le deuxième joint 304 vers la première surface 282, lorsque le doigt 303 coulisse dans la cavité 316 de l'extérieur vers l'intérieur jusqu'à la première position de serrage du bord 281. La deuxième surface 3037 d'appui monte par exemple dans le même sens que la surface 284 qui est par exemple une surface arrière 284 de rebord du bord 281, éloignée axialement de la première surface 282. Ainsi, le déplacement de l'extérieur vers l'intérieur du doigt 303 pour arriver dans la première position de serrage provoque, par l'intermédiaire de la surface 3037 d'appui, le déplacement du deuxième joint 3040 dans le premier sens A1 vers la première surface 282 du bord 281. En outre, le bord 281 comporte une surface extérieure latérale 283, qui est par exemple parallèle à l'axe A et qui est raccordée d'une part à la surface 282 et d'autre part à la surface 284. Le doigt 303 comporte par exemple une autre surface 3037b plus éloignée de l'axe A que sa surface 3037 et parallèle à l'axe A, pour l'appui contre la surface extérieure latérale 283.

Suivant un mode de réalisation, il est prévu comme doigts 303 au moins trois doigts 303 dont au moins deux 303a, 303b sont positionnés dans un premier secteur angulaire SEC1 de 180 degrés autour de l'axe A et dont au moins un autre 303c est positionné dans un deuxième secteur angulaire SEC2 de 180 degrés complémentaire du premier secteur SEC1 dans la première position de serrage du bord 281 du tube 28, ainsi que cela est représenté à la figure 6. Il peut être par exemple prévu trois doigts 303. Bien entendu, il peut être également prévu quatre doigts 303 ou un plus grand nombre de doigts 303.

Suivant un mode de réalisation, des doigts 303 sont répartis d'une manière équiangle autour de l'axe A dans la première position de serrage. Ainsi, dans le cas de trois doigts 303, ceux-ci peuvent être répartis régulièrement à 120 degrés l'un de l'autre autour de l'axe A. Dans le cas de quatre doigts 303, ceux-ci peuvent être répartis régulièrement à 90 degrés l'un de l'autre autour de l'axe A.

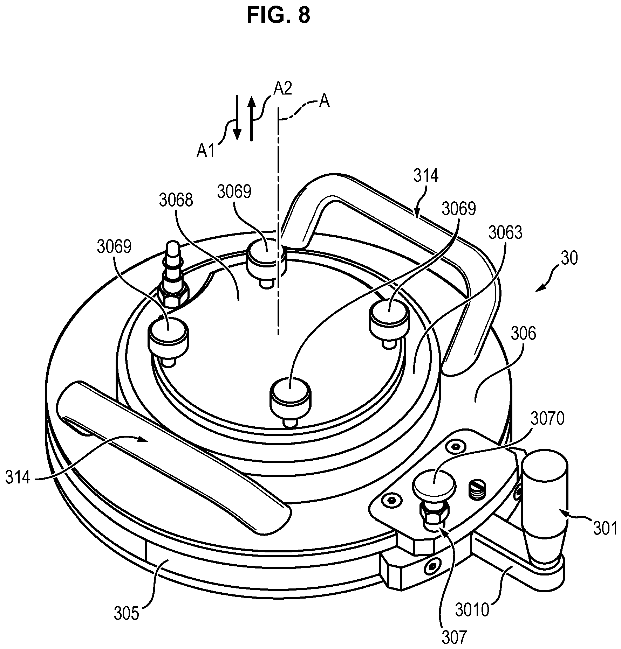

Le dispositif 30 d'étanchéité peut être utilisé avec ou sans EIS (Equipements Interne inférieur) c'est-à-dire avec ou sans colonne 27. Dans un mode de réalisation à la figure 8, dans le cas d'une utilisation sans EIS, c'est-à-dire sans la colonne 27, mais où le dispositif 30 d'étanchéité doit être serré autour du bord 281 du tube 28, un ou plusieurs bouchon 3068 peut être mis en place et fixé à l'embase 306 pour boucher la traversée 3061, ainsi que cela est représenté à la figure 8. Le bouchon 3068 est fixé à la partie supérieure 3063, par exemple par des moyens 3069 de fixation amovibles, pouvant être du type boulonnage ou autres.

L'invention concerne également un procédé de montage du dispositif 30 d'étanchéité décrit ci-dessus contre un bord 281 d'extrémité d'un tube 28 et contre une colonne 27 devant traverser selon l'axe A de la colonne 27 une ouverture 285 du tube 28, délimitée par ce bord 281, le dispositif 30 d'étanchéité comportant les moyens 3036 de transmission de mouvement décrits ci-dessus.

Suivant ce procédé, au cours d'une première étape, on fait tourner la bague 305 et l'embase 306 l'une par rapport à l'autre autour de l'axe A de la deuxième position de rotation relative à la première position de rotation relative (c'est-à-dire dans le premier sens S1 de serrage), pour serrer l'embase 306 contre le bord 281 du tube 28 et pour presser le deuxième organe 304 d'étanchéité contre le bord 281 du tube 28.

Puis, au cours d'une deuxième étape, on active le premier organe 310 d'étanchéité pour le presser contre la colonne 27 dans la traversée 3061.

Le dispositif 30 d'étanchéité suivant l'invention et le procédé de montage de celui-ci suivant l'invention peuvent être utilisés pour être fixés autour et réaliser une étanchéité sur le bord 281 d'un tube 28 fixé au couvercle 3 d'une cuve 1 d'un réacteur nucléaire, tel que représenté aux figures 1 et 2 et ainsi que décrit ci-dessus, et sur la colonne 27 de thermocouple de cette cuve 1.

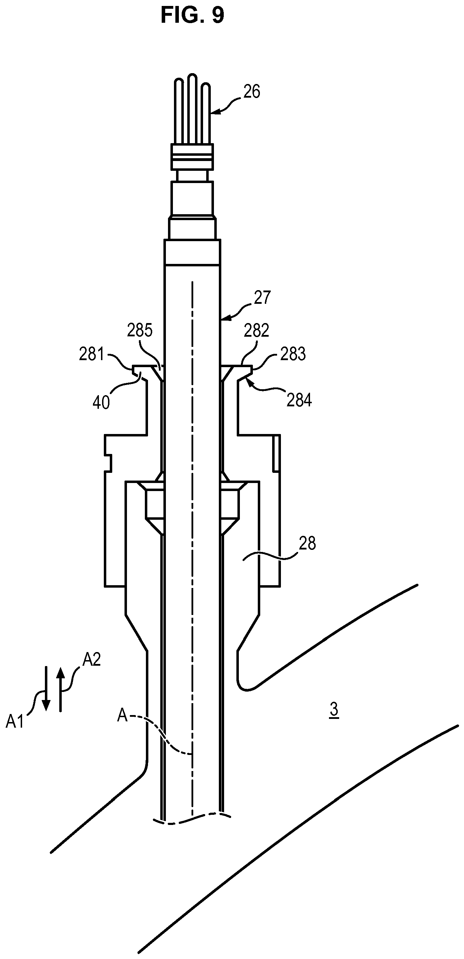

Dans ce qui précède, le bord 281 auquel doit être fixé le dispositif d'étanchéité suivant l'invention peut être une bride 40, elle-même soudée au tube 28, lui-même soudé sur le couvercle 3, la bride 40 et le tube 28 étant traversés par la colonne 27, ainsi que cela est représenté à la figure 9, la bride 40 comportant les parties 281, 282, 283, 284 et 285 décrites ci-dessus. Le tube 28 peut être un tube adaptateur 28, adapté pour permettre la sortie étanche d'une colonne 27 au sein de laquelle se trouvent des sondes mobiles 26 ayant fonction de thermocouple.

Ainsi, la procédure de mise sous vide de cette cuve 1 de réacteur nucléaire en utilisant le dispositif 30 d'étanchéité suivant l'invention peut être la suivante.

Au moment du retrait des systèmes dédiés d'étanchéité, alors que le couvercle 3 est toujours sur la cuve 1 après l'arrêt de la tranche, on place le dispositif 30 d'étanchéité et on le verrouille au bord 281 du tube 28 dans la première position de serrage, par rotation de l'embase 306 et de la bague 306 dans le premier sens SI l'un par rapport à l'autre.

Puis, on ôte le couvercle 3 par rapport à la cuve 1 et on dépose ce couvercle 3.

Dans un autre mode de réalisation, ces deux premières les étapes peuvent être confondues; la pose et le verrouillage pouvant être fait une fois le couvercle déposé.

On dispose ensuite l'embout d'une conduite de fluide de pression à l'about 302 du dispositif 30.

Puis, on remet le couvercle 3 sur le plan 10 de joint de la cuve 1 pour commencer l'opération de Mise Sous Vide, le dispositif 30 étant équipé de sa conduite d'injection de fluide sous pression.

Puis, à partir d'un pupitre distant, une action de mise sous pression de la conduite est commandée pour gonfler le joint dynamiques 300 et assurer l'étanchéité autour de la colonne 27.

Ensuite, un temps de repos est offert pour observer toute dérive de la pression, qui serait signe d'une fuite ou d'un dysfonctionnement du joint dynamique 300.

Puis, on met en oeuvre, la procédure de MSV et de remplissage du circuit primaire, telle que décrite ci-dessus.

A la fin de cette procédure de MSV et de remplissage du circuit primaire, le vide dans le circuit primaire étant cassé et étant donné le retour à la pression atmosphérique, on opère à distance pour desserrer le joint dynamique 300 en libérant le fluide de compression.

Puis, afin de garantir une totale libération de la colonne 27, il est provoqué une légère dépression sur le joint dynamique 300.

Ensuite, on dépose le couvercle 3 comprenant le dispositif 30 installé dessus, et le chargement du coeur pourra commencer.

Puis, on retire la conduite d'injection de l'about 302.

Ensuite, on déverrouille le dispositif 30 d'étanchéité par rapport au bord 281 du tube 28 dans la deuxième position de desserrage, par rotation de l'embase 306 et de la bague 306 dans le deuxième sens S2 l'un par rapport à l'autre. On enlève ensuite le dispositif 30 par rapport au tube 28 et à la colonne 27.

Le couvercle, dégarni du dispositif 30, pourra ensuite être remonté sur le plan de joint 10 de la cuve 1.

La présente invention contribue à améliorer la situation actuelle, en particulier elle réduit à moins d'une minute le temps d'exposition dosante à des rayonnements ionisants. Elle permet de gagner du temps sur le chemin critique en opérant en temps masqué. Elle allège les systèmes environnants, en permettant de se dispenser des échafaudages qui étaient habituellement prévus dans l'état de la technique au fond de la piscine autour de la cuve 1, et de ce fait elle réduit les coûts pour l'exploitant.

L'application principale de la présente invention est la réalisation d'une étanchéité autour des colonnes 27 de thermocouples traversant le couvercle 3 de cuve 1 en vue de la mise sous vide du circuit primaire suivant le remplissage des épingles, dans le contexte décrit ci-dessus en référence aux figures 1 et 2.

Une utilisation secondaire de l'invention consiste à se servir du dispositif 30 d'étanchéité comme protection de portées de joints. En effet, ces portées de joints sont très sensibles et leurs éventuelles réparations s'avèrent très délicates.

L'invention permet une réduction du temps d'exposition du personnel aux rayonnements ionisants, avec notamment une réduction du temps global passé en fond de piscine (échafaudeurs, opérateurs travaux cuve) et un gain d'environ 3,5 mSv / Mise Sous Vide (valeurs estimative).

L'invention permet une réduction du temps d'intervention du personnel, avec notamment une fiabilisation et une sécurisation de l'étanchéité autour des colonnes 27, une installation de l'outillage en temps masqué, un gain d'environ 3h45 / mise sous vide.

L'invention permet une amélioration de la sécurité, avec notamment une suppression du besoin d'accès au couvercle 3 par les échafaudages du fond de piscine qui engendraient des risques de chutes, une suppression du montage des échafaudages (manutention manuelle).

## Revendications

1. Dispositif (30) d'étanchéité destiné à être fixé contre un bord (281) d'extrémité d'un tube (28) et contre une colonne (27) devant traverser selon un axe (A) de la colonne (27) une ouverture (285) du tube (28), délimitée par ce bord (281), le dispositif comportant une embase (306) ayant une traversée (3061) pour le passage axial de la colonne (27), un premier organe (310) d'étanchéité apte à être activé pour être pressé contre la colonne (27) dans la traversée (3061), un corps (3060) entourant autour de l'axe (A) une cavité (316) pour recevoir le bord (281) du tube (28) et un deuxième organe (304) d'étanchéité destiné à être pressé contre le bord (281) du tube (28) dans la cavité (316), la traversée (3061) communiquant axialement avec la cavité (316),
**caractérisé en ce que** le dispositif (30) comporte également une bague (305) de serrage et **en ce que** le corps (3060) comporte une pluralité de guides (3030), qui sont répartis autour de la cavité (316) et qui s'étendent entre un côté intérieur (3064) débouchant dans la cavité (316) et un côté extérieur (3062) débouchant contre la bague (305) de serrage concentrique, montée rotative autour de l'axe (A) par rapport à l'embase (306),
une pluralité de doigts intérieurs (303) solidaires d'une pluralité d'organes extérieurs (3031) d'actionnement étant guidés respectivement dans la pluralité de guides (3030) autour de la cavité (316), la bague (305) comportant une pluralité de zones (3051) d'actionnement distantes entre elles et aptes à être positionnées contre respectivement la pluralité d'organes extérieurs (3031) d'actionnement pour faire coulisser les doigts (303) en saillie dans la cavité (316) pour le serrage des doigts (303) contre le bord (281) du tube (28) lorsque la bague (305) et l'embase (306) sont l'une par rapport à l'autre dans une première position de rotation relative, dite première position de serrage du bord (281) du tube (28),
la bague (305) et l'embase (306) étant aptes à passer, par rotation l'une par rapport à l'autre autour de l'axe (A), entre l'une et l'autre de la première position de rotation relative et d'une deuxième position de rotation relative, dite de desserrage du bord (281) du tube (28), dans laquelle la pluralité de zones (3051) d'actionnement est écartée de la pluralité d'organes (3031) extérieurs d'actionnement pour permettre aux doigts (303) d'être rentrés dans le corps (3060).

2. Dispositif d'étanchéité suivant la revendication 1, **caractérisé en ce que** la pluralité de guides (3030) s'étend radialement par rapport à l'axe (A) pour le guidage radial des doigts (303) par rapport à l'axe (A).

3. Dispositif d'étanchéité suivant l'une quelconque des revendications précédentes, **caractérisé en ce que** l'embase (306) et/ou le corps (3060) est solidaire d'au moins une première poignée (314), tandis que la bague (305) est solidaire d'au moins une deuxième poignée (301).

4. Dispositif d'étanchéité suivant l'une quelconque des revendications précédentes, **caractérisé en ce que** l'embase (306) comporte un verrou (307) de blocage de la bague (305) et du corps (3060) dans leur première position de rotation relative, le verrou (307) étant relié à un moyen (3070) d'actionnement manuel permettant de déverrouiller le verrou (307) pour permettre le passage de la première position de rotation relative à la deuxième position de rotation relative.

5. Dispositif d'étanchéité suivant l'une quelconque des revendications précédentes, **caractérisé en ce que** la pluralité de zones (3051) d'actionnement comprend respectivement une pluralité de parties (3052) de la surface intérieure (3053) de la bague (305), séparées entre elles autour de l'axe (A) par une pluralité d'évidements (3054) de cette surface intérieure (3053), qui sont plus éloignés de l'axe (A) que ses parties (3052) et qui servent à la réception respectivement de la pluralité d'organes extérieurs (3031) d'actionnement dans la deuxième position de rotation relative.

6. Dispositif d'étanchéité suivant la revendication précédente, **caractérisé en ce que** chaque évidement (3054) a une première pente, partant de la partie (3052) de la surface intérieure (3053) de la bague (305) et s'éloignant de l'axe (A) jusqu'à un fond (3055) de l'évidement (3054), pour le guidage de l'organe extérieur (3031) d'actionnement entre l'une et l'autre d'une première position rentrée dans le guide (3030) dans la première position de rotation relative et d'une deuxième position saillante dans le fond (3055) dans la deuxième position de rotation relative.

7. Dispositif d'étanchéité suivant la revendication précédente, **caractérisé en ce que** chaque organe extérieur (3031) d'actionnement comprend une came (3032) ayant une deuxième pente tournée vers la bague (305) et montant dans le même sens que la première pente.

8. Dispositif d'étanchéité suivant l'une quelconque des revendications précédentes, **caractérisé en ce que** chaque guide (3030) comporte un élément (3033) de contrainte pour contraindre l'organe extérieur (3031) d'actionnement à se déplacer vers la bague (305).

9. Dispositif d'étanchéité suivant l'une quelconque des revendications précédentes, **caractérisé en ce que** le premier organe (310) d'étanchéité comporte un premier joint dynamique (300), jouxtant la traversée (3061) et apte à être activé par gonflage par l'injection d'un fluide via un about (302) de l'embase (306) pour presser une partie (311) du premier joint (300) contre la colonne (27) dans la traversée (3061).

10. Dispositif d'étanchéité suivant l'une quelconque des revendications précédentes, **caractérisé en ce qu'**il comporte des moyens de transmission de mouvement pour presser le deuxième organe (304) d'étanchéité contre le bord (281) du tube (28), lorsque la bague (305) et l'embase (306) passent de la deuxième position de rotation relative et à la première position de rotation relative.

11. Dispositif d'étanchéité suivant la revendication précédente, **caractérisé en ce que** le deuxième organe (304) d'étanchéité comporte un deuxième joint (3040) d'étanchéité tourné dans un premier sens (A1) de l'axe (A) vers une première surface (282) du bord (281) du tube (28),
les moyens (3036) de transmission de mouvement comportent sur chaque doigt (303) une deuxième surface (3037) d'appui contre une deuxième surface (284) du bord (281), laquelle est éloignée axialement de la première surface (282), cette deuxième surface d'appui (3037) montant dans un deuxième sens (A2) inverse du premier sens (A1) en allant de l'intérieur vers l'extérieur, pour presser le deuxième joint (304) vers la première surface (282), lorsque le doigt (303) coulisse dans la cavité (316) de l'extérieur vers l'intérieur jusqu'à la première position de serrage du bord (281).

12. Dispositif d'étanchéité suivant l'une quelconque des revendications précédentes, **caractérisé en ce qu'**au moins trois doigts, dont au moins deux (303a, 303b) sont positionnés dans un premier secteur angulaire (SEC1) de 180° autour de l'axe (A) et dont au moins un autre (303c) est positionné dans un deuxième secteur angulaire (SEC2) de 180° complémentaire du premier secteur (SEC1) dans la première position de serrage du bord (281) du tube (28), sont prévus.

13. Dispositif d'étanchéité suivant l'une quelconque des revendications précédentes, **caractérisé en ce qu'**il comporte des moyens (3039) de fixation amovible d'au moins un bouchon (3068) pour boucher la traversée (3061) en l'absence de colonne (27) dans cette dernière.

14. Procédé de montage du dispositif d'étanchéité suivant l'une quelconque des revendications précédentes contre un bord (281) d'extrémité d'un tube (28) et contre une colonne (27) devant traverser selon un axe (A) de la colonne (27) une ouverture (285) du tube (28), délimitée par ce bord (281), le dispositif d'étanchéité comportant des moyens (3036) de transmission de mouvement pour presser le deuxième organe (304) d'étanchéité contre le bord (281) du tube (28), lorsque la bague (305) et l'embase (306) passent de la deuxième position de rotation relative et à la première position de rotation relative de serrage contre le bord (281) du tube (28),
procédé dans lequel
on fait tourner la bague (305) et l'embase (306) l'une par rapport à l'autre autour de l'axe (A) de la deuxième position de rotation relative et à la première position de rotation relative, pour serrer l'embase (306) contre le bord (281) du tube (28) et pour presser le deuxième organe (304) d'étanchéité contre le bord (281) du tube (28),
puis on active le premier organe (310) d'étanchéité pour le presser contre la colonne (27) dans la traversée (3061).

## Patentansprüche

1. Abdichtungsvorrichtung (30) zur Befestigung an einem Endrand (281) eines Rohrs (28) und an einer Säule (27), die gemäß einer Achse (A) der Säule (27) eine Öffnung (285) des Rohrs (28) durchqueren muss, die durch diesen Rand (281) begrenzt ist, wobei die Vorrichtung eine Basis (306) mit einer Durchführung (3061) für den axialen Durchgang der Säule (27), ein erstes Dichtungsorgan (310), das imstande ist, aktiviert zu sein, um gegen die Säule (27) in der Durchführung (3061) gepresst zu sein, einen Körper (3060), der um die Achse (A) einen Hohlraum (316) umgibt, um den Rand (281) des Rohrs (28) aufzunehmen und ein zweites Dichtungsorgan (304) zum Pressen gegen den Rand (281) des Rohrs (28) in dem Hohlraum (316) aufweist, wobei die Durchführung (3061) mit dem Hohlraum (316) axial kommuniziert,
**dadurch gekennzeichnet, dass** die Vorrichtung (30) ebenfalls einen Spannring (305) aufweist und dass der Körper (3060) eine Vielzahl von Führungen (3030) aufweist, die um den Hohlraum (316) verteilt sind und die sich zwischen einer Innenseite (3064), die in den Hohlraum (316) ausmündet, und einer Außenseite (3062), die gegen den konzentrischen Spannring (305) ausmündet, der um die Achse (A) in Bezug auf die Basis (306) rotierend angebracht ist, erstrecken,
wobei eine Vielzahl innerer Finger (303), die mit einer Vielzahl äußerer Betätigungsorgane (3031) fest verbunden sind, jeweils in die Vielzahl von Führungen (3030) um den Hohlraum (316) geführt werden, wobei der Ring (305) eine Vielzahl von Betätigungszonen (3051) aufweist, die voneinander beabstandet sind und imstande, jeweils gegen die Vielzahl äußerer Betätigungsorgane (3031) positioniert zu sein, um zu bewirken, dass die Finger (303) in den Hohlraum vorspringend (316) für das Spannen der Finger (303) gegen den Rand (281) des Rohrs (28) gleiten, wenn der Ring (305) und die Basis (306) im Verhältnis zueinander in einer relativen ersten Rotationsposition, bezeichnet als erste Spannposition des Randes (281) des Rohrs (28), sind,
wobei der Ring (305) und die Basis (306) imstande sind, durch Rotation im Verhältnis zueinander um die Achse (A) zwischen der einen und der anderen von der relativen ersten Rotationsposition und einer relativen zweiten Rotationsposition, bezeichnet als Lösen des Randes (281) des Rohrs (28), zu wechseln, in welcher die Vielzahl von Betätigungszonen (3051) von der Vielzahl äußerer Betätigungsorgane (3031) beabstandet ist, um den Fingern (303) zu erlauben, im Körper (3060) eingeführt zu sein.

2. Abdichtungsvorrichtung nach Anspruch 1, **dadurch gekennzeichnet, dass** sich die Vielzahl von Führungen (3030) in Bezug auf die Achse (A) für das radiale Führen der Finger (303) in Bezug auf die Achse (A) radial erstreckt.

3. Abdichtungsvorrichtung nach einem der vorangehenden Ansprüche, **dadurch gekennzeichnet, dass** die Basis (306) und/oder der Körper (3060) mit mindestens einem ersten Griff (314) fest verbunden ist, wogegen der Ring (305) mit mindestens einem zweiten Griff (301) fest verbunden ist.

4. Abdichtungsvorrichtung nach einem der vorangehenden Ansprüche, **dadurch gekennzeichnet, dass** die Basis (306) einen Riegel (307) zur Verriegelung des Rings (305) und des Körpers (3060) in ihrer relativen ersten Rotationsposition aufweist, wobei der Riegel (307) mit einem manuellen Betätigungsmittel (3070) verbunden ist, das erlaubt, den Riegel (307) zu entriegeln, um den Wechsel aus der relativen ersten Rotationsposition in die relative zweite Rotationsposition zu erlauben.

5. Abdichtungsvorrichtung nach einem der vorangehenden Ansprüche, **dadurch gekennzeichnet, dass** die Vielzahl von Betätigungszonen (3051) jeweils eine Vielzahl von Teilen (3052) der inneren Fläche (3053) des Rings (305) umfasst, die voneinander um die Achse (A) durch eine Vielzahl von Aussparungen (3054) dieser inneren Fläche (3053) getrennt sind, die von der Achse (A) weiter entfernt sind als ihre Teile (3052) und die für die Aufnahme jeweils der Vielzahl äußerer Betätigungsorgane (3031) in der relativen zweiten Rotationsposition dienen.

6. Abdichtungsvorrichtung nach vorangehendem Anspruch, **dadurch gekennzeichnet, dass** jede Aussparung (3054) eine erste Neigung, ausgehend von dem Teil (3052) der inneren Fläche (3053) des Rings (305) und sich erstreckend von der Achse (A) bis zu einem Boden (3055) der Aussparung (3054), zum Führen des äußeren Betätigungsorgans (3031) zwischen der einen und der anderen von einer ersten, in die Führung (3030) eingefahrenen Position in der relativen ersten Rotationsposition, und einer zweiten, in den Boden (3055) vorstehenden Position in der relativen zweiten Rotationsposition, hat.

7. Abdichtungsvorrichtung nach vorangehendem Anspruch, **dadurch gekennzeichnet, dass** jedes äußere Betätigungsorgan (3031) einen Nocken (3032) mit einer zweiten Neigung zum Ring (305) und ansteigend in derselben Richtung wie die erste Neigung umfasst.

8. Abdichtungsvorrichtung nach einem der vorangehenden Ansprüche, **dadurch gekennzeichnet, dass** jede Führung (3030) ein Zwangselement (3033) aufweist, um das äußere Betätigungsorgan (3031) zu zwingen, sich zum Ring (305) zu verlagern.

9. Abdichtungsvorrichtung nach einem der vorangehenden Ansprüche, **dadurch gekennzeichnet, dass** das erste Dichtungsorgan (310) eine erste dynamische Dichtung (300) aufweist, die an der Durchführung (3061) angrenzt und imstande ist, durch Aufblasen durch Einleiten eines Fluids über einen Anschlag (302) der Basis (306) aktiviert zu werden, um einen Teil (311) der ersten Dichtung (300) gegen die Säule (27) in der Durchführung (3061) zu pressen.

10. Abdichtungsvorrichtung nach einem der vorangehenden Ansprüche, **dadurch gekennzeichnet, dass** sie Bewegungsübertragungsmittel aufweist, um das zweite Dichtungsorgan (304) gegen den Rand (281) des Rohrs (28) zu pressen, wenn der Ring (305) und die Basis (306) aus der relativen zweiten Rotationsposition und in die relative erste Rotationsposition wechseln.

11. Abdichtungsvorrichtung nach vorangehendem Anspruch, **dadurch gekennzeichnet, dass** das zweite Dichtungsorgan (304) eine zweite Dichtung (3040) aufweist, die in einer ersten Richtung (A1) der Achse (A) zu einer ersten Fläche (282) des Randes (281) des Rohrs (28) zeigt,
wobei die Bewegungsübertragungsmittel (3036) auf jedem Finger (303) eine zweite Stützfläche (3037) zur Stützung gegen eine zweite Fläche (284) des Randes (281) aufweisen, die von der ersten Fläche (282) axial entfernt ist, wobei diese zweite Stützfläche (3037) in einer zweiten Richtung (A2) umgekehrt zur ersten Richtung (A1) von innen nach außen ansteigt, um die zweite Dichtung (304) zu der ersten Fläche (282) zu pressen, wenn der Finger (303) in den Hohlraum (316) von außen nach innen bis zu der ersten Spannposition des Randes (281) gleitet.

12. Abdichtungsvorrichtung nach einem der vorangehenden Ansprüche, **dadurch gekennzeichnet, dass** mindestens drei Finger, von denen mindestens zwei (303a, 303b) in einem ersten Winkelsektor (SEC1) von 180° um die Achse (A) positioniert sind, und von denen mindestens ein anderer (303c) in einem zweiten Winkelsektor (SEC2) von 180°, der komplementär zum ersten Sektor (SEC1) in der ersten Spannposition des Randes (281) des Rohrs (28) ist, positioniert ist, vorgesehen sind.

13. Abdichtungsvorrichtung nach einem der vorangehenden Ansprüche, **dadurch gekennzeichnet, dass** sie lösbare Befestigungsmittel (3039) mindestens eines Stopfens (3068) zum Verschließen der Durchführung (3061) bei Abwesenheit einer Säule (27) in derselben aufweist.

14. Verfahren zur Montage der Abdichtungsvorrichtung nach einem der vorangehenden Ansprüche an einem Endrand (281) eines Rohrs (28) und an einer Säule (27), die gemäß einer Achse (A) der Säule (27) eine Öffnung (285) des Rohrs (28) durchqueren muss, die durch diesen Rand (281) begrenzt ist, wobei die Abdichtungsvorrichtung Bewegungsübertragungsmittel (3036) aufweist, um das zweite Dichtungsorgan (304) gegen den Rand (281) des Rohrs (28) zu pressen, wenn der Ring (305) und die Basis (306) aus der relativen zweiten Rotationsposition und in die relative erste Rotationsspannposition gegen den Rand (281) des Rohrs (28) wechseln,
wobei bei dem Verfahren
der Ring (305) und die Basis (306) im Verhältnis zueinander um die Achse (A) aus der relativen zweiten Rotationsposition und in die relative erste Rotationsposition gedreht werden, um die Basis (306) gegen den Rand (281) des Rohrs (28) zu spannen und um das zweite Dichtungsorgan (304) gegen den Rand (281) des Rohrs (28) zu pressen,
dann das erste Dichtungsorgan (310) aktiviert wird, um es gegen die Säule (27) in der Durchführung (3061) zu pressen.

## Claims

1. A sealing device (30) intended to be fixed against an end edge (281) of a tube (28) and against a column (27) which must pass along an axis (A) of the column through an opening (285) in the tube (28), delimited by this edge (281), the device including a base (306) having a feedthrough (3061) for the axial passage of the column (27), a first sealing member (310) capable of being activated to be pressed against the column (27) in the feedthrough (3061), a body (3060) surrounding around the axis (A) a cavity (316) for receiving the edge (281) of the tube (28) and a second sealing member (304) intended to be pressed against the edge (281) of the tube (28) in the cavity (316), the feedthrough (3061) communicating axially with the cavity (316),
**characterized in that** the device (30) comprises also a clamping ring (305), and **in that** the body (3060) includes a plurality of guides (3030), which are distributed around the cavity (316) and which extend between an inner side (3064) which opens into the cavity (316) and an outer side (3062) which opens against the concentric clamping ring (305), rotatably mounted around the axis (A) with respect to the base (306),
a plurality of inner fingers (303) integral with a plurality of outer actuating members (3031) being guided respectively in the plurality of guides (3030) around the cavity (316), the ring (305) including a plurality of actuation zones (3051) which are mutually distant and which are capable of being positioned against respectively the plurality of outer actuating members (3031) to cause the inner fingers (303) to slide and to protrude in the cavity (316) for clamping the fingers (303) against the edge (281) of the tube (28) when the ring (305) and the base (306) are, with respect to one another, in a first relative rotational position, called first tube (28) edge (281) clamping position,
the ring (305) and the base (306) being capable of passing, by rotation with respect to one another around the axis (A), between one and the other of the first relative rotational position and a second relative rotational position, called tube (28) edge (281) unclamping position, in which the plurality of actuation zones (3051) is at a distance from the plurality of outer actuating members (3031) to allow the fingers (303) to be retracted into the body (3060).

2. The sealing device according to claim 1, **characterized in that** the plurality of guides (3030) extends radially with respect to the axis (A) for the radial guidance of the fingers (303) with respect to the axis (A).

3. The sealing device according to any one of the preceding claims, **characterized in that** the base (306) and/or the body (3060) is integral with at least a first handle (314), and the ring (305) is integral with at least a second handle (301).

4. The sealing device according to any one of the preceding claims, **characterized in that** the base (306) includes a lock (307) for blocking the ring (305) and the body (3060) in their first relative rotational position, the lock (307) being connected to a manual actuation means (3070) allowing the lock (307) to be unlocked to allow passage from the first relative rotational position to the second relative rotational position.

5. The sealing device according to any one of the preceding claims, **characterized in that** the plurality of actuation zones (3051) comprises respectively a plurality of portions (3052) of the inner surface (3053) of the ring (305), separated from one another around the axis (A) by a plurality of recesses (3054) of this inner surface (3053), which are farther from the axis (A) than its portions (3052) and which are used for the reception, respectively, of the plurality of outer actuating members (3031) in the second relative rotational position.

6. The sealing device according to the preceding claim, **characterized in that** each recess (3054) has a first slope, starting from the portion (3052) of the inner surface (3053) of the ring (305) and extending away from the axis (A) until a bottom (3055) of the recess (3054), for guiding the outer actuating member (3031) between one and the other of a first position retracted into the guide (3030) in the first relative rotational position and a second position protruding in the bottom (3055) in the second relative rotational position.

7. The sealing device according to the preceding claim, **characterized in that** each outer actuating member (3031) comprises a cam (3032) having a second slope turned toward the ring (305) and rising in the same direction as the first slope.

8. The sealing device according to any one of the preceding claims, **characterized in that** each guide (3030) includes a biasing element (3033) for biasing the outer actuating member (3031) to move toward the ring (305).

9. The sealing device according to any one of the preceding claims, **characterized in that** the first sealing member (310) includes a first dynamic seal (300), adjoining the feedthrough (3061) and capable of being activated by inflation by injection of a fluid via an endpiece (302) of the base (306) to press a portion (311) of the first seal (300) against the column (27) in the feedthrough (3061).

10. The sealing device according to any one of the preceding claims, **characterized in that** it includes movement transmission means for pressing the second sealing member (304) against the edge (281) of the tube (28), when the ring (305) and the base (306) pass from the second relative rotational position to the first relative rotational position.

11. The sealing device according to the preceding claim, **characterized in that** the second sealing member (304) includes a second seal (3040) turned in a first direction (A1) of the axis (A) toward a first surface (282) of the edge (281) of the tube (28),
the movement transmission means (3036) include on each finger (303) a second support surface (3037) for bearing against a second surface (284) of the edge (281), which is axially distant from the first surface (282), this second support surface (3037) rising in a second direction (A2), which is reverse of the first direction (A1) and runs from the inside to the outside, to press the second seal (304) toward the first surface (282), when the finger (303) slides in the cavity (316) from the outside to the inside until the first tube edge (281) clamping position.

12. The sealing device according to any one of the preceding claims, **characterized in that** at least three fingers are provided, of which at least two (303a, 303b) are positioned in a first 180° angular sector (SEC1) around the axis (A) and of which at least one other (303c) is positioned in a second 180° angular sector (SEC2) complementary to the first sector (SEC1) in the first tube (28) edge (281) clamping position.

13. The sealing device according to any one of the preceding claims, **characterized in that** it includes removable fixing means (3039) of at least one plug (3068) to plug the feedthrough (3061) in the absence of a column (27) in the latter.

14. A method for mounting the sealing device according to any one of the preceding claims against an end edge (281) of a tube (28) and against a column (27) which must pass through an opening (285) in the tube (28), delimited by this edge (281), along an axis (A) of the column (27), the sealing device including movement transmission means (3036) for pressing the second sealing member (304) against the edge (281) of the tube (28), when the ring (305) and the base (306) pass from the second relative rotational position to the first relative rotational position for clamping against the edge (281) of the tube (28),
a method in which
the ring (305) and the base (306) are rotated with respect to one another around the axis (A) from the second relative rotational position to the first relative rotational position, for clamping the base (306) against the edge (281) of the tube (28) and for pressing the second sealing member (304) against the edge (281) of the tube (28),
then the first sealing member (310) is activated to press it against the column (27) in the feedthrough (3061).
